# EUROPEAN PATENT APPLICATION

(11) **EP 4 560 511 A1**
(43) Date of publication of application: **28.05.2025**
(21) Application number: 24214078.8
(22) Date of filing: 20.11.2024
(51) Int. Cl.: G06F 21/57, H04L 9/40, G06F 8/65, H04L 9/08

(54) **INFORMATION PROCESSING DEVICE, FIRMWARE UPDATE SYSTEM, AND FIRMWARE UPDATE METHOD**

(30) Priority: 21.11.2023 JP 2023197325; 19.09.2024 JP 2024161629
(71) Applicant: Oki Electric Industry Co., Ltd., Minato-ku Tokyo 105-8460 (JP)
(72) Inventor: KURIBARA, Nobuhiro, Tokyo, 105-8460 (JP); YASUKAWA, Hideki, Japan, 105-8460 (JP); HIRATA, Masaru, Japan, 105-8460 (JP)
(74) Representative: Betten & Resch

(57) **Abstract**

To facilitate the use of FW for updating an information processing device while further enhancing security performance. An FW update system 100 includes a PC 130, a server 110 that stores first encrypted FW, which is FW encrypted with a common key, and a printer 150 that acquires the first encrypted FW via the PC 130. The printer 150 generates a pair of a device-specific private key and a device-specific public key, receives second encrypted FW including the first encrypted FW and an encrypted common key, which is the common key encrypted by using the device-specific public key via the PC 130, decrypts the encrypted common key by using the device-specific private key to acquire the common key, and then decrypts the first encrypted FW by using the common key, thereby acquiring the FW. By using this FW, the printer 150 then updates the FW of the printer 150.

## Description

### BACKGROUND OF THE INVENTION

### 1. Field of the Invention

The present disclosure relates to an information processing device, a firmware update system, and a firmware update method.

### 2. Description of the Related Art

To prevent a person with malicious intent from tampering with firmware (FW) for updating printers, conventionally, a common key is prepared for each printer model, and the FW is encrypted with the common key (see, for example, Japanese Patent Application Publication No. 2017-173893).

### SUMMARY OF THE INVENTION

In conventional technologies, a common key is prepared for each printer model, which makes it difficult to set FW individually for different devices within the same printer model.

In contrast, since FW for updating is made publicly available to printer users, it is not practical to upload the FW for updating which is encrypted with a device-specific private key, onto a public server.

Therefore, one or more aspects of the present disclosure have an object to facilitate the use of FW for updating an information processing device while further enhancing security performance.

An information processing device according to one aspect of the present disclosure acquires first encrypted firmware via an information communication device from a storage device (110, 310) that stores the first encrypted firmware. The first encrypted firmware is firmware encrypted with a common key. The information processing device includes: a first communication unit configured to communicate with the information communication device; a first key generation unit configured to generate a pair of a first unique private key and a first unique public key that is a pair of a private key and a public key; a key processing unit configured to receive, via the first communication unit, second encrypted firmware including the first encrypted firmware and an encrypted common key that is the common key encrypted using the first unique public key, decrypt the encrypted common key by using the first unique private key to acquire the common key, and decrypt the first encrypted firmware by using the common key to acquire the firmware; and a firmware update unit configured to update firmware of the information processing device by using the acquired firmware.

A firmware update method according to one aspect of the present disclosure is a method for updating firmware of an information processing device by using first encrypted firmware that is firmware encrypted with a common key, the method including: generating a pair of a first unique private key and a first unique public key that is a pair of a private key and a public key; receiving second encrypted firmware including the first encrypted firmware and an encrypted common key that is the common key encrypted using the first unique public key; decrypting the encrypted common key by using the first unique private key to acquire the common key; decrypting the first encrypted firmware by using the common key to acquire the firmware; and updating the firmware of the information processing device by using the acquired firmware.

According to one or more aspects of the present disclosure, the use of the FW for updating the information processing device is facilitated while further enhancing security performance.

### BRIEF DESCRIPTION OF THE DRAWINGS

FIG. 1 is a block diagram schematically illustrating a configuration of an FW update system according to first, fourth and fifth embodiments.
FIG. 2 is a block diagram schematically illustrating a configuration of a server in the first embodiment.
FIG. 3 is a block diagram schematically illustrating a configuration of a computer.
FIG. 4 is a block diagram schematically illustrating a configuration of a PC in the first embodiment.
FIG. 5 is a block diagram schematically illustrating a configuration of a printer in the first embodiment.
FIGs. 6A and 6B are block diagrams, each illustrating an example of a hardware configuration.
FIG. 7 is a sequence diagram illustrating an operation of the FW update system in the first embodiment.
FIG. 8 is a block diagram schematically illustrating a configuration of an FW update system according to second and third embodiments.
FIG. 9 is a block diagram schematically illustrating a configuration of a PC in the second embodiment.
FIG. 10 is a sequence diagram illustrating an operation of the FW update system in the second embodiment.
FIG. 11 is a block diagram schematically illustrating a configuration of a server in the third embodiment.
FIG. 12 is a block diagram schematically illustrating a configuration of a PC in the third embodiment.
FIG. 13 is a sequence diagram illustrating an operation of the FW update system in the third embodiment.
FIG. 14 is a block diagram schematically illustrating a configuration of a printer in the fourth embodiment.
FIG. 15 is a schematic diagram illustrating a first example of log information.
FIG. 16 is a sequence diagram illustrating an operation of the FW update system in the fourth embodiment.
FIG. 17 is a block diagram schematically illustrating a configuration of a printer in the fifth embodiment.
FIG. 18 is a schematic diagram schematically illustrating a second example of log information.
FIG. 19 is a sequence diagram illustrating an operation of an FW update system in the fifth embodiment.

### DETAILED DESCRIPTION OF THE INVENTION

### First Embodiment

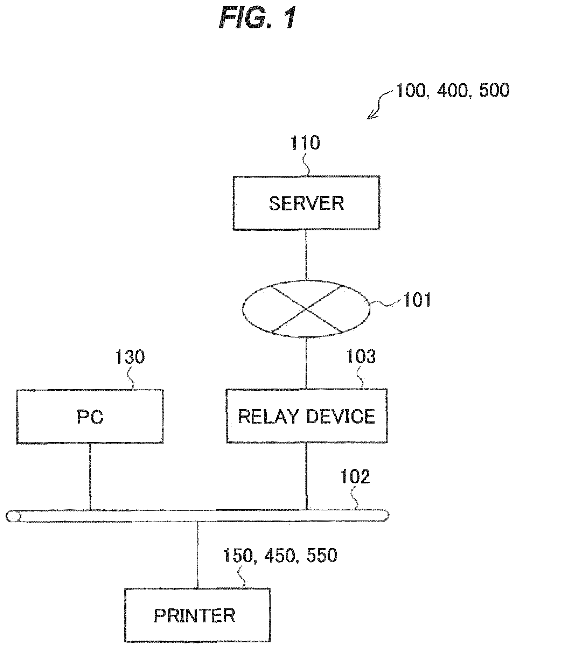

FIG. 1 is a block diagram schematically illustrating a configuration of a Firmware (FW) update system 100 according to a first embodiment.

The FW update system 100 includes a server 110 serving as a storage device, a Personal Computer (PC) 130 serving as an information communication device, and a printer 150 serving as an information processing device.

The server 110 and the PC 130 are connected to a first network 101, e.g., the Internet, and the PC 130 and the printer 150 are connected to a second network 102, e.g., a Local Area Network (LAN).

The PC 130 is connected to the first network 101 via a relay device 103 such as a router.

The FW update system 100 includes the PC 130, the server 110 that stores first encrypted FW, which is FW encrypted with a common key, and the printer 150 that acquires the first encrypted FW via the PC 130.

Specifically, in the FW update system 100, the PC 130 acquires the FW from the server 110, and the printer 150 acquires the FW from the PC 130. By using the acquired FW, the printer 150 then updates its own FW.

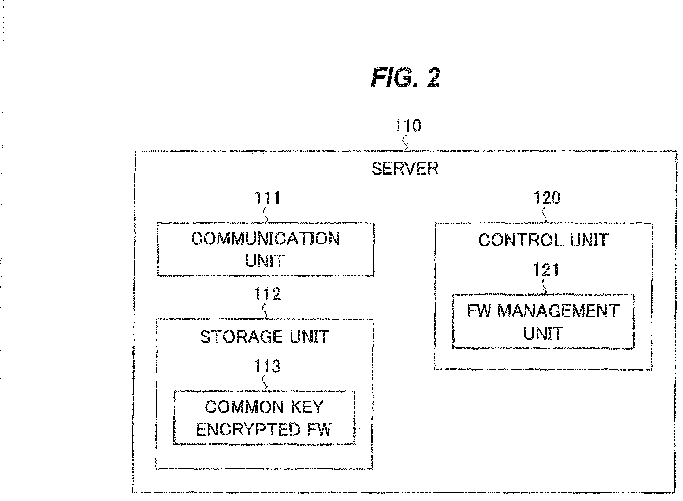

FIG. 2 is a block diagram schematically illustrating a configuration of the server 110 in the first embodiment. The server 110 includes a communication unit 111, a storage unit 112, and a control unit 120.

The communication unit 111 is a third communication unit that communicates with the PC 130.

For example, the communication unit 111 communicates with the PC 130 via the first network 101 and the relay device 103.

The storage unit 112 stores data and programs necessary for processing in the server 110.

For example, the storage unit 112 stores, as the first encrypted FW, a common key encrypted FW 113, which is the FW encrypted using the common key shared with the PC 130.

The control unit 120 controls processing in the server 110.

The control unit 120 includes an FW management unit 121.

The FW management unit 121 sends the common key encrypted FW 113 to the PC 130 via the communication unit 111.

For example, the FW management unit 121 receives an acquisition request for the FW of the printer 150 from the PC 130, via the communication unit 111.

When the FW management unit 121 receives the acquisition request, it reads the common key encrypted FW 113 from the storage unit 112.

The FW management unit 121 then sends the common key encrypted FW 113 to the PC 130 via the communication unit 111.

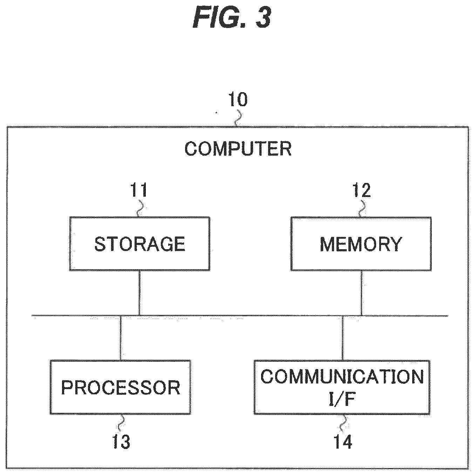

The server 110 described above can be implemented by a computer 10, for example, such as that illustrated in FIG. 3.

The computer 10 includes a storage 11 such as a Hard Disk Drive (HDD) or a Solid State Drive (SSD), a memory 12, a processor 13 such as a Central Processing Unit (CPU), and a communication InterFace (I/F) 14 such as a Network Interface Card (NIC).

For example, the storage unit 112 can be implemented by the storage 11 or the memory 12.

The control unit 120 can be implemented by the processor 13 loading a program stored in the storage 11 onto the memory 12 and executing the program.

The communication unit 111 can be implemented by the communication I/F 14.

The program may be downloaded to the storage 11 from a recording medium (not illustrated) via a reader/writer (not illustrated) or from the network via the communication I/F 14, and then loaded into the memory 12 and executed by the processor 13. Alternatively, the program may also be loaded directly into the memory 12 from the recording medium via the reader/writer or from the network via the communication I/F 14 and executed by the processor 13.

In other words, the program may be provided by a computer program product, such as a recording medium.

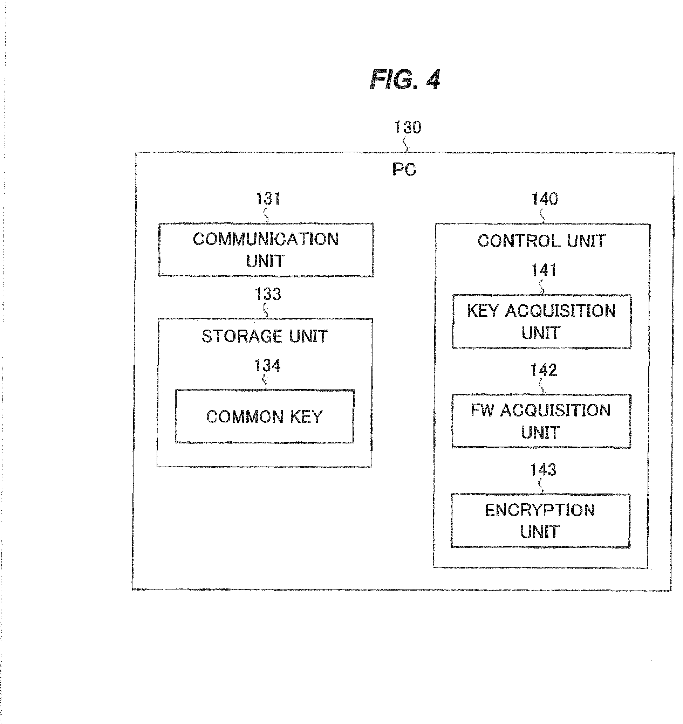

FIG. 4 is a block diagram schematically illustrating a configuration of the PC 130 in the first embodiment.

The PC 130 includes a communication unit 131, a storage unit 133, and a control unit 140.

The communication unit 131 is a second communication unit that communicates with the printer 150 and the server 110.

Specifically, the communication unit 131 communicates with the server 110 via the second network 102, the relay device 103 and the first network 101.

The communication unit 131 communicates with the printer 150 via the second network 102.

The storage unit 133 stores data and programs necessary for processing in the PC 130.

For example, the storage unit 133 stores a common key 134.

The common key 134 is a key shared with the server 110.

The control unit 140 controls the processing in the PC 130.

The control unit 140 includes a key acquisition unit 141, an FW acquisition unit 142, and an encryption unit 143.

The key acquisition unit 141 acquires a device-specific public key from the printer 150 via the communication unit 131.

Specifically, the key acquisition unit 141 sends an acquisition request for the device-specific public key to the printer 150 via the communication unit 131 to acquire the device-specific public key of the printer 150 as its response. The device-specific public key acquired in this way is provided to the encryption unit 143.

The FW acquisition unit 142 acquires the common key encrypted FW 113 from the server 110 as the first encrypted FW via the communication unit 131.

Specifically, the FW acquisition unit 142 sends an acquisition request for the FW to the server 110 via the communication unit 131 and then receives the common key encrypted FW 113 as its response.

The FW acquisition unit 142 provides the common key encrypted FW 113 received from the server 110 to the encryption unit 143.

The FW acquisition unit 142 receives an encrypted common key-attached FW from the encryption unit 143. This encrypted common key-attached FW is generated by attaching an encrypted common key, which is the common key 134 encrypted with the device-specific public key, to the common key encrypted FW 113.

Then, the FW acquisition unit 142 sends the encrypted common key-attached FW received from the encryption unit 143 as second encrypted FW to the printer 150 via the communication unit 131.

The encryption unit 143 is a first encryption unit that encrypts the common key 134 by using the device-specific public key acquired via the communication unit 131 to generate an encrypted common key.

For example, the encryption unit 143 receives the device-specific public key of the printer 150 from the key acquisition unit 141 and then encrypts the common key 134 stored in the storage unit 133 by using the device-specific public key to generate the encrypted common key.

The encryption unit 143 then attaches the encrypted common key to the common key encrypted FW 113 to generate the encrypted common key-attached FW.

The encryption unit 143 provides the generated encrypted common key-attached FW to the FW acquisition unit 142.

The PC 130 described above can also be implemented by the computer 10, for example, such as that illustrated in FIG. 3.

For example, the storage unit 133 can be implemented by the storage 11 or the memory 12.

The control unit 140 can be implemented by the processor 13 loading a program stored in the storage 11 onto the memory 12 and executing the program.

The communication unit 131 can be implemented by the communication I/F 14.

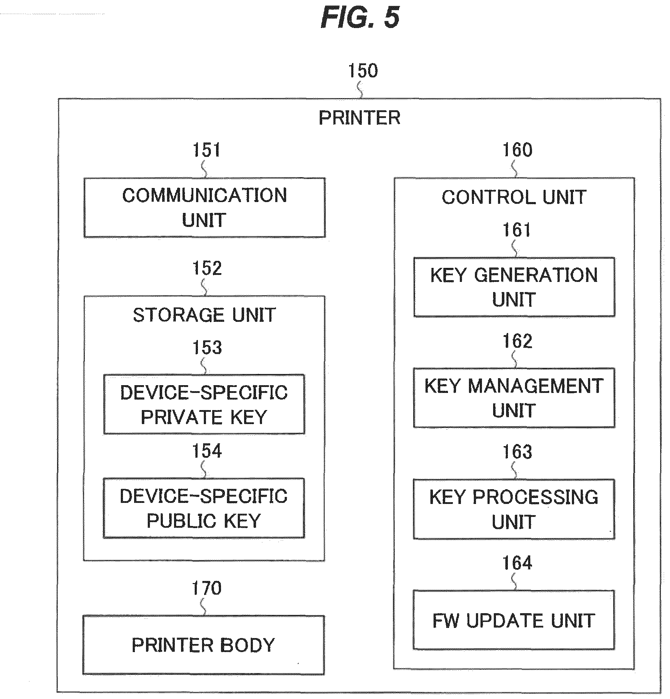

FIG. 5 is a block diagram schematically illustrating a configuration of the printer 150 in the first embodiment.

The printer 150 includes a communication unit 151, a storage unit 152, a control unit 160, and a printer body 170 as a body of the information processing device.

The communication unit 151 is a first communication unit that communicates with the PC 130 via the first network 101.

The storage unit 152 stores data and programs necessary for processing in the printer 150.

For example, the storage unit 152 stores a device-specific private key 153 as a first unique private key and a device-specific public key 154 as a first unique public key.

The pair of the device-specific private key 153 and the device-specific public key 154 is a pair of a private key and a public key generated by the printer 150 according to public key cryptography. In the pair of the private key and the public key generated by the public key cryptography, encrypted data acquired through encryption with the public key is configured such that it cannot be decrypted without this private key. The public key cryptography here only needs to utilize any known technology.

The control unit 160 controls the processing in the printer 150.

The control unit 160 includes a key generation unit 161, a key management unit 162, a key processing unit 163, and an FW update unit 164.

The key generation unit 161 is a first key generation unit that generates a pair of the device-specific private key 153 and the device-specific public key 154, which is a pair of the private key and the public key of the printer 150.

For example, the key generation unit 161 generates a pair of the device-specific private key 153 and the device-specific public key 154, which is a pair of the private key and the public key specific to the printer 150 according to the known public key cryptography. The key generation unit 161 here may generate the device-specific private key 153 and the device-specific public key 154 upon the initial startup of the printer 150. The generated device-specific private key 153 and device-specific public key 154 are stored in the storage unit 152.

The key management unit 162 manages the device-specific private key 153 and the device-specific public key 154 stored in the storage unit 152.

For example, the key management unit 162 sends the device-specific public key to the PC 130 via the communication unit 151.

Specifically, when the key management unit 162 receives an acquisition request for the device-specific public key from the PC 130 via the communication unit 151, the key management unit 162 reads the device-specific public key 154 from the storage unit 152. It then sends the device-specific public key 154 to and responds to the PC 130 via the communication unit 151.

The key processing unit 163 receives, via the communication unit 151, the second encrypted FW that includes the encrypted common key, which is the common key encrypted with the device-specific public key, and decrypts the encrypted common key by using the device-specific private key to acquire the common key. The key processing unit 163 then decrypts the common key encrypted FW 113 included in the second encrypted FW by using the decrypted common key to acquire the FW.

Specifically, when the key processing unit 163 receives the encrypted common key-attached FW from the PC 130 via the communication unit 151, the key processing unit 163 decrypts the encrypted common key included in the encrypted common key-attached FW by using the device-specific private key 153 read from the storage unit 152, thereby acquiring the common key.

By using the common key acquired in this way, the key processing unit 163 decrypts the common key encrypted FW 113 included in the encrypted common key-attached FW, thereby acquiring the FW.

The FW acquired in this way is provided to the FW update unit 164.

The FW update unit 164 updates the FW of the printer 150 by using the FW acquired in the key processing unit 163.

For example, the FW update unit 164 updates the FW by replacing the FW stored in a storage unit (not shown) of the printer body 170 with the FW decrypted by the key processing unit 163.

The printer body 170 is a portion that executes processing of printing images on a medium.

The printer body 170 here may perform electrophotographic printing, ink-jet printing, dot-impact printing, or any other methods of printing, and thus its printing method is not limited.

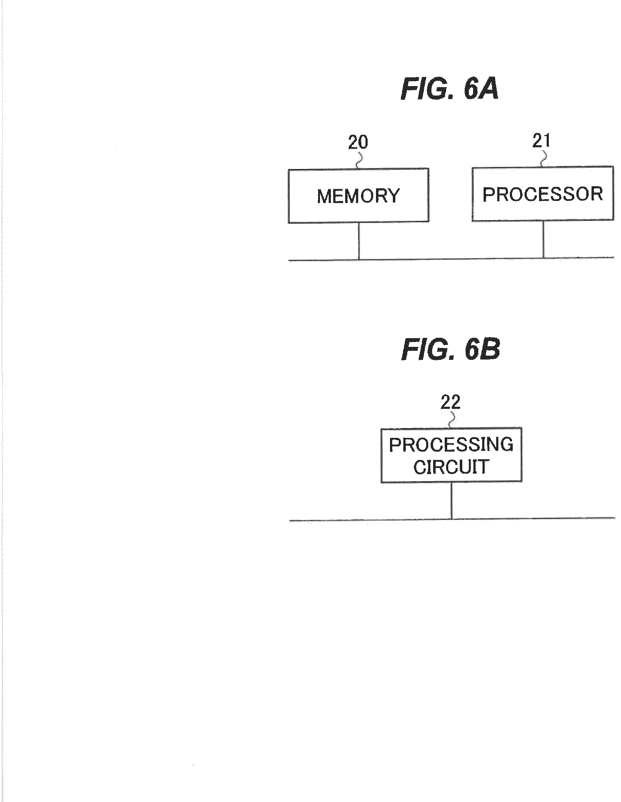

Part or all of the control unit 160 of the printer 150 described above can be composed of a memory 20 and a processor 21 such as a Central Processing Unit (CPU) that executes a program stored in the memory 20, as illustrated in FIG. 6A, for example. Such a program may be provided over a network or recorded on a recording medium. That is, such a program may be provided, for example, as a computer program product.

Alternatively, as illustrated in FIG. 6B, part or all of the control unit 160 can be composed of a processing circuit 22 such as a single circuit, a composite circuit, a program-operated processor, a program-operated parallel processor, an Application Specific Integrated Circuit (ASIC) or a Field Programmable Gate Array (FPGA).

As described above, the control unit 160 can be implemented by processing circuitry.

The storage unit 152 can be implemented by a storage such as a memory.

The communication unit 151 can be implemented by a communication I/F such as an NIC.

Furthermore, the printer body 170 can be implemented by a printing mechanism that performs electrophotographic printing, ink-jet printing, dot-impact printing, or the like.

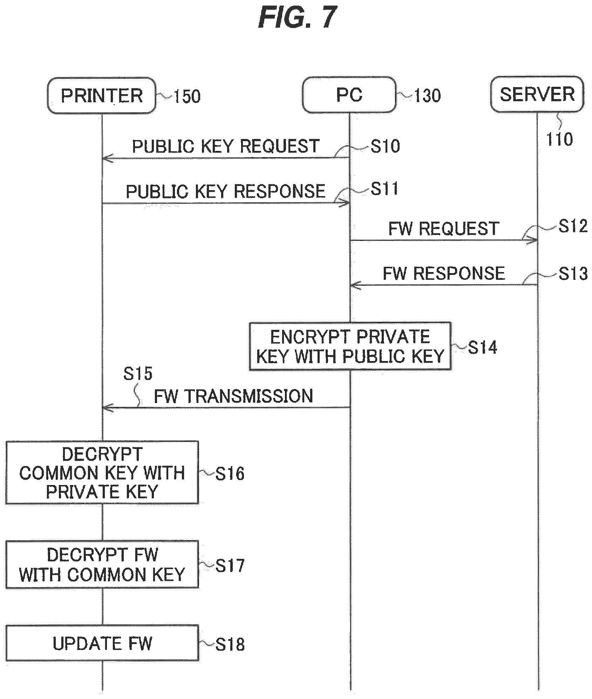

FIG. 7 is a sequence diagram illustrating an operation of the FW update system 100 in the first embodiment.

First, the key acquisition unit 141 of the PC 130 sends to the printer 150, an acquisition request for the device-specific public key of the printer 150 via the communication unit 131 (S10).

In the printer 150 that has received such an acquisition request, the key management unit 162 makes a response by sending the device-specific public key 154 read from the storage unit 152, to the PC 130 via the communication unit 151 (S11).

Next, in the PC 130, the FW acquisition unit 142 sends an acquisition request for the FW to the server 110 via the communication unit 131 (S12).

In the server 110 that has received such an acquisition request, the FW management unit 121 makes a response by reading the common key encrypted FW 113 stored in the storage unit 112, and then sending the common key encrypted FW 113 to the PC 130 via the communication unit 111 (S13).

In the PC 130 that has received the common key encrypted FW 113, the encryption unit 143 encrypts the common key 134 stored in the storage unit 133 by using the device-specific public key 154 received in step S11 to generate an encrypted common key (S14). The encryption unit 143 then attaches the encrypted common key to the common key encrypted FW 113 acquired in step S13 to generate the encrypted common key-attached FW.

The FW acquisition unit 142 sends the encrypted common key-attached FW to the printer 150 via the communication unit 131 (S15).

In the printer 150 that has received the encrypted common key-attached FW, the key processing unit 163 decrypts the encrypted common key included in the encrypted common key-attached FW by using the device-specific private key 153 read from the storage unit 152, thereby acquiring the common key (S16).

By using the common key acquired in this way, the key processing unit 163 decrypts the common key encrypted FW 113 included in the encrypted common key-attached FW, thereby acquiring the FW (S17).

The FW update unit 164 then updates the FW of the printer 150 by using such an FW (S18).

In the sequence described above, the PC 130 acquires the device-specific public key 154 from the printer 150 (S10 and S11) and then acquires the common key encrypted FW 113 from the server 110 (S12 and S13), but the first embodiment is not limited to such an example. For example, the PC 130 may acquire the device-specific public key 154 from the printer 150 (S10 and S11) after acquiring the common key encrypted FW 113 from the server 110 (S12 and S13).

As described above, in the first embodiment, even if the encrypted common key-attached FW is leaked, other devices will not be able to decrypt this encrypted common key-attached FW, thereby improving security performance. In addition, even if the device-specific private key is leaked, another printer 150 cannot use this device-specific private key.

### Second Embodiment

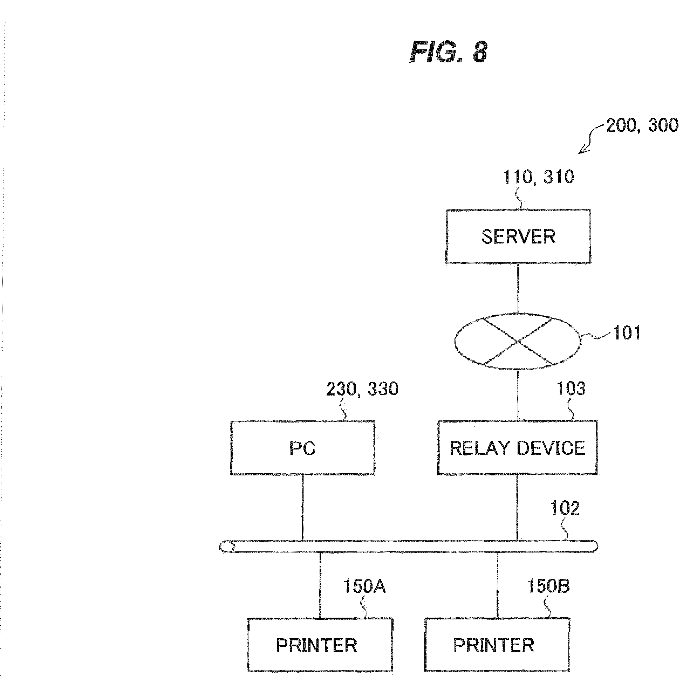

FIG. 8 is a block diagram schematically illustrating a configuration of an FW update system 200 according to a second embodiment.

The FW update system 200 includes the server 110, a PC 230, and printers 150A and 150B.

The server 110 and the PC 230 are connected to the first network 101, and the PC 230 and the printers 150A and 150B are connected to the second network 102.

The PC 230 is connected to the first network 101 via the relay device 103.

The server 110 of the FW update system 200 according to the second embodiment is configured in the same manner as the server 110 of the FW update system 100 according to the first embodiment.

The FW update system 200 according to the second embodiment includes the two printers 150A and 150B. Each of the two printers 150A and 150B is configured in the same manner as the printer 150 in the FW update system 100 according to the first embodiment.

If there is no particular need to distinguish between the respective printers 150A and 150B, each of the printers 150A and 150B is referred to as the printer 150.

In the second embodiment, the two printers 150 are provided, but the number of printers 150 only needs to be more than one.

In the FW update system 200 according to the second embodiment, the PC 230 acquires the FW from the server 110 and sends it to the printers 150A and 150B. Each of the plural printers 150A and 150B then updates its own FW by using the acquired FW.

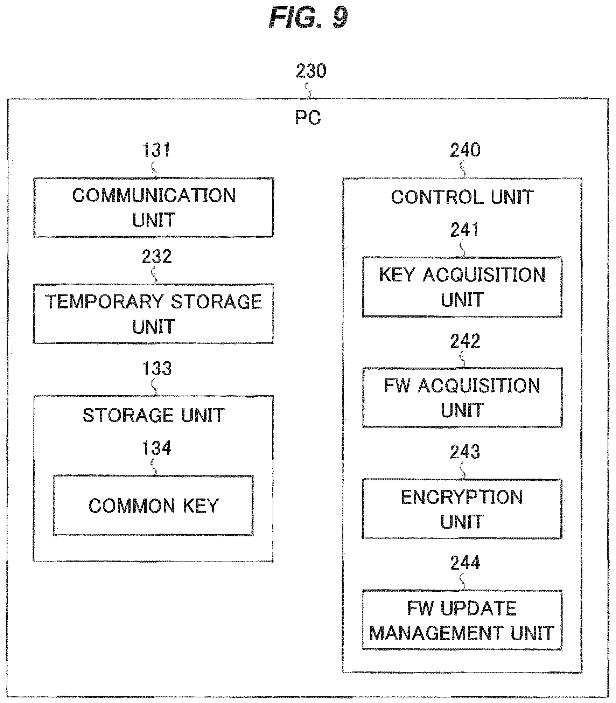

FIG. 9 is a block diagram schematically illustrating a configuration of the PC 230 in the second embodiment.

The PC 230 includes the communication unit 131, a temporary storage unit 232, the storage unit 133, and a control unit 240.

The communication unit 131 and the storage unit 133 of the PC 230 in the second embodiment are substantially the same as the communication unit 131 and the storage unit 133 of the PC 130 in the first embodiment, respectively.

The temporary storage unit 232 temporarily stores data necessary for processing in the PC 230.

Here, the temporary storage unit 232 temporarily stores the common key encrypted FW 113 acquired from the server 110.

The control unit 240 controls the processing in the PC 230.

The control unit 240 includes a key acquisition unit 241, an FW acquisition unit 242, an encryption unit 243, and an FW update management unit 244.

The FW update management unit 244 manages the updating of FWs of the printers 150A and 150B, which are connected to the second network 102 to which the PC 230 is connected.

For example, the FW update management unit 244 performs a device search via the communication unit 131 in order to detect the printers 150A and 150B, each of whose FWs is managed to be updated.

The technique to perform the device search may be, for example, a broadcast Get request for a specific Object Identifier (OID) with a Simple Network Management Protocol (SNMP), or a multicast query using a Multicast Domain Name System (MDNS) or the like. Any known technology that can search for a device connected to the network may be used.

Here, it is assumed that the printers 150A and 150B are detected through the device search performed by the FW update management unit 244.

The FW update management unit 244 stores the common key encrypted FW 113 acquired by the FW acquisition unit 242, in the temporary storage unit 232, as described below.

The FW update management unit 244 then sends the encrypted common key-attached FW including the encrypted common key, which has been encrypted by the encryption unit 243, to each of the plural printers 150, as mentioned later. After sending the corresponding encrypted common key-attached FW to each of the plural printers 150, the FW update management unit 244 deletes the common key encrypted FW from the temporary storage unit 232.

Specifically, the FW update management unit 244 sends the encrypted common key-attached FW generated in the encryption unit 243 to the printers 150A and 150B detected through the device search, via the communication unit 131, as described later.

After the FW update management unit 244 sends the corresponding encrypted common key-attached FW to all printers 150A and 150B detected through the device search, the FW update management unit 244 deletes the common key encrypted FW stored in the temporary storage unit 232.

The FW acquisition unit 242 acquires the common key encrypted FW 113 from the server 110 via the communication unit 131.

Specifically, the FW acquisition unit 242 sends an acquisition request for the FW to the server 110 via the communication unit 131 and then receives the common key encrypted FW 113 as its response.

The FW acquisition unit 242 then provides the common key encrypted FW 113 received from the server 110 to the FW update management unit 244.

The key acquisition unit 241 acquires a device-specific public key from each of the plural printers 150 via the communication unit 131.

Specifically, the key acquisition unit 241 sends an acquisition request for the device-specific public key to each of the printers 150A and 150B, which are detected by the FW update management unit 244, via the communication unit 131 to acquire the device-specific public key from each of the printers 150A and 150B as its response. The device-specific public key acquired in this way is provided to the encryption unit 243.

The encryption unit 243 encrypts the common key 134 stored in the storage unit 133 by using the device-specific public key of each of the plural printers 150 to generate the encrypted common key.

The encryption unit 243 is the first encryption unit that then attaches the generated encrypted common key to the common key encrypted FW 113 stored in the temporary storage unit 232 to generate the encrypted common key-attached FW as the second encryption FW.

Specifically, the encryption unit 243 receives the device-specific public key from the key acquisition unit 241 and then encrypts the common key 134 stored in the storage unit 133 by using the device-specific public key, thereby generating the encrypted common key.

Next, the encryption unit 243 attaches the generated encrypted common key to the common key encrypted FW stored in the temporary storage unit 232 to generate the encrypted common key-attached FW. The encrypted common key-attached FW generated in this way is provided to the FW update management unit 244.

The PC 230 described above can be implemented by the computer 10, for example, such as that illustrated in FIG. 3.

For example, the temporary storage unit 232 can be implemented by the memory 12.

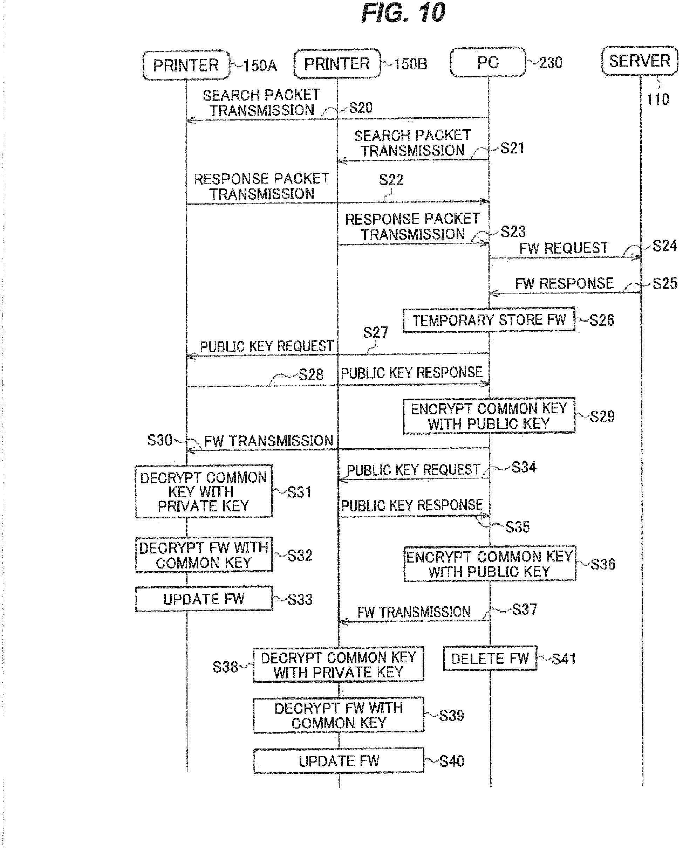

FIG. 10 is a sequence diagram illustrating an operation of the FW update system 200 in the second embodiment.

First, the FW update management unit 244 of the PC 230 sends via communication unit 131, a packet to perform the device search for a device that is connected to the second network 102 to which the PC 230 is connected (S20, S21).

In the printer 150A that has received such a packet, the communication unit 151 returns a response packet (S22).

Similarly, also in the printer 150B, the communication unit 151 returns a response packet (S23).

Based on the above, the FW update management unit 244 of the PC 230 can detect the printers 150A and 150B connected to the second network 102.

Next, the FW acquisition unit 242 of the PC 230 sends the acquisition request for the FW to the server 110 via the communication unit 131 (S24).

In the server 110 that has received such an acquisition request, the FW management unit 121 makes a response by sending the common key encrypted FW 113 stored in the storage unit 112 to the PC 230 via the communication unit 111 (S25).

In the PC 230 that has received the common key encrypted FW 113, the FW update management unit 244 receives the common key encrypted FW 113 via the communication unit 131 and the FW acquisition unit 242, and temporarily stores the common key encrypted FW 113 in the temporary storage unit 232 (S26). It is noted that the temporary storage unit 232 is a functional unit implemented by the memory 12 (see FIG. 3), which is volatile, so as to ensure that the common key encrypted FW 113 is deleted after use.

Next, the key acquisition unit 241 of the PC 230 sends to the printer 150A detected based on the response packet in step S22, an acquisition request for the device-specific public key of the printer 150A via the communication unit 131 (S27).

In the printer 150A that has received such an acquisition request, the key management unit 162 makes a response by sending the device-specific public key 154 read from the storage unit 152, to the PC 230 via the communication unit 151 (S28).

In the PC 230 that has received the response about the device-specific public key 154, the encryption unit 243 encrypts the common key 134 stored in the storage unit 133 by using the device-specific public key 154 received from the printer 150A to generate an encrypted common key (S29). The encryption unit 243 then attaches the generated encrypted common key to the common key encrypted FW 113 stored in the temporary storage unit 232 to generate an encrypted common key-attached FW.

The FW update management unit 244 of the PC 230 then sends the generated encrypted common key-attached FW to the printer 150A via the communication unit 131 (S30) .

In the printer 150A that has received the encrypted common key-attached FW, the key processing unit 163 decrypts the encrypted common key included in the encrypted common key-attached FW by using the device-specific private key 153 read from the storage unit 152, thereby acquiring the common key (S31).

The key processing unit 163 then decrypts the common key encrypted FW 113 included in the encrypted common key-attached FW, by using the acquired common key, thereby acquiring the FW (S32).

The FW update unit 164 then updates the FW of the printer 150A by using the acquired FW (S33).

The key acquisition unit 241 of the PC 230 sends an acquisition request for the device-specific public key of the printer 150B to the printer 150B, which has been detected based on the response packet in step S23, via the communication unit 131 (S34).

In the printer 150B that has received such an acquisition request, the key management unit 162 makes a response by sending the device-specific public key 154, which has been read from the storage unit 152, to the PC 230 via the communication unit 151 (S35).

In the PC 230 that has received the response about the device-specific public key 154, the encryption unit 243 encrypts the common key 134 stored in the storage unit 133 by using the device-specific public key 154 received from the printer 150B to generate an encrypted common key (S36). The encryption unit 243 then attaches the generated encrypted common key to the common key encrypted FW 113 stored in the temporary storage unit 232 to generate an encrypted common key-attached FW.

The FW update management unit 244 of the PC 230 then sends the generated encrypted common key-attached FW to the printer 150B via the communication unit 131 (S37).

In the printer 150B that has received the encrypted common key-attached FW, the key processing unit 163 decrypts the encrypted common key included in the encrypted common key-attached FW by using the device-specific private key 153 read from the storage unit 152, thereby acquiring a common key (S38).

The key processing unit 163 then decrypts the common key encrypted FW 113 included in the encrypted common key-attached FW, by using the acquired common key, thereby acquiring the FW (S39).

The FW update unit 164 then updates the FW of the printer 150B by using the acquired FW (S40).

When the FW update management unit 244 of the PC 230 completes the sending of the encrypted common key-attached FW to all printers 150, which have been detected through the device search performed in steps S20 to S23, the FW update management unit 244 deletes the common key encrypted FW 113 stored in the temporary storage unit 232 (S41).

In the sequence described above, the PC 230 acquires the device-specific public key 154 from the printers 150A and 150B (S27 and S28, or S34 and S35) after acquiring the common key encrypted FW 113 from the server 110 (S24 and S25), but the second embodiment is not limited to this example. For example, the PC 230 may acquire the device-specific public key 154 from the printers 150A and 150B (S27 and S28, or S34 and S35) and may then acquire the common key encrypted FW 113 from the server 110 (S24 and S25).

As described above, according to the second embodiment, considering that downloading the FW for each of the printers 150 increases traffic, the FW is encrypted on the PC 230, which helps reduce traffic. In addition, the FW can then be deleted from the PC 230, thereby improving security performance.

### Third Embodiment

As illustrated in FIG. 8, the FW update system 300 according to a third embodiment includes a server 310, a PC 330, and the printers 150A and 150B.

The FW update system 300 according to the third embodiment also includes two printers 150A and 150B. Each of the two printers 150A and 150B is configured in the same manner as the printer 150 in the FW update system 100 according to the first embodiment.

If there is no particular need to distinguish between the respective printers 150A and 150B, each of the printers 150A and 150B is referred to as the printer 150.

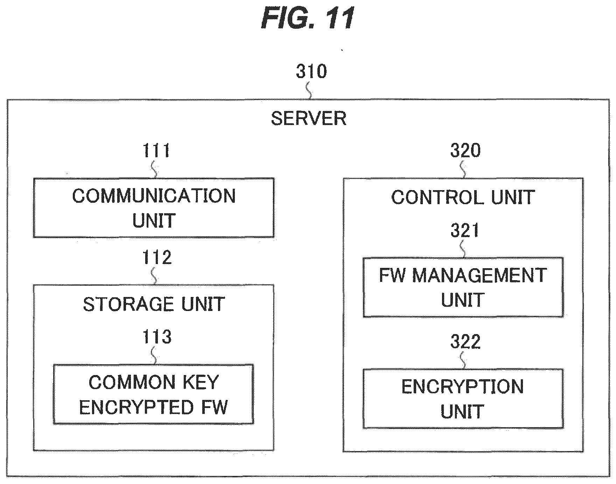

FIG. 11 is a block diagram schematically illustrating a configuration of the server 310 in the third embodiment.

The server 310 includes the communication unit 111, the storage unit 112, and a control unit 320.

The communication unit 111 and the storage unit 112 of the server 310 in the third embodiment are substantially the same as the communication unit 111 and the storage unit 112 of the server 110 in the first embodiment, respectively.

The control unit 320 controls the processing in the server 310.

The control unit 320 includes an FW management unit 321 and an encryption unit 322.

The FW management unit 321 receives an acquisition request for the FW of the printer 150 from the PC 330 via the communication unit 111.

The FW management unit 321 extracts a PC-specific public key, which is a public key specific to the PC 330 and is included in the acquisition request, and provides the PC-specific public key to the encryption unit 322.

The FW management unit 321 acquires from the encryption unit 322, a re-encrypted FW, which is a common key encrypted FW 113 re-encrypted using the PC-specific public key.

The FW management unit 321 then sends the re-encrypted FW to the PC 330 via the communication unit 111.

The encryption unit 322 is a second encryption unit that encrypts the common key encrypted FW 113 as the first encrypted FW by using the PC-specific public key acquired via the communication unit 111 to generate the re-encrypted FW as a third encrypted FW.

Specifically, the encryption unit 322 receives the PC-specific public key of the PC 330 from the FW management unit 321 and then re-encrypts the common key encrypted FW 113 stored in the storage unit 112 by using the received PC-specific public key to generate the re-encrypted FW, which is the common key encrypted FW re-encrypted.

The encryption unit 322 then provides the re-encrypted FW to the FW management unit 321.

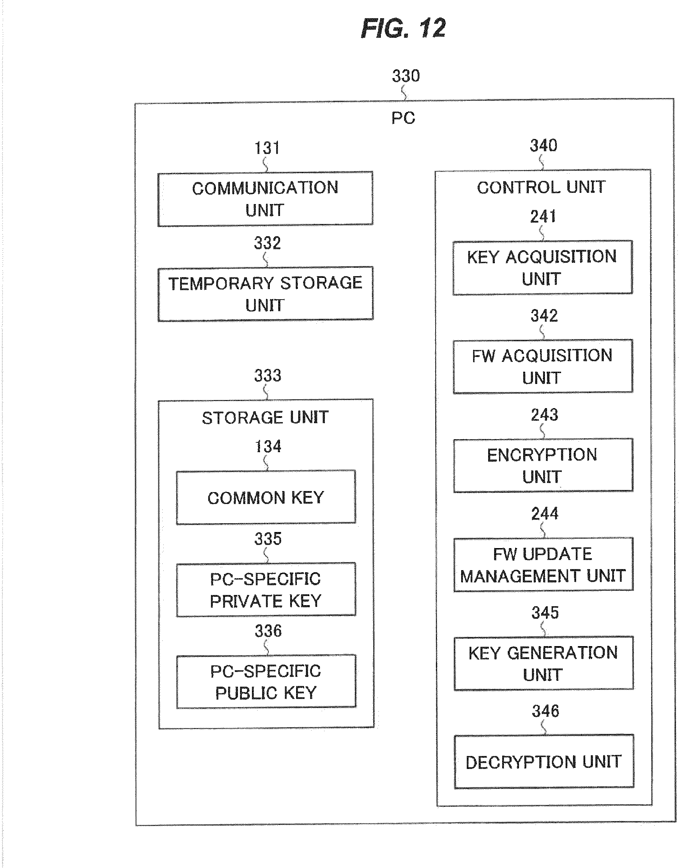

FIG. 12 is a block diagram schematically illustrating a configuration of the PC 330 in the third embodiment.

The PC 330 includes the communication unit 131, a temporary storage unit 332, a storage unit 333, and a control unit 340.

The communication unit 131 of the PC 330 in the third embodiment is substantially the same as the communication unit 131 of the PC 130 in the first embodiment.

The temporary storage unit 332 temporarily stores data necessary for processing in the PC 330.

Here, the temporary storage unit 332 temporarily stores the common key encrypted FW 113 which has been acquired from the server 310 and then decrypted in the PC 330.

The storage unit 333 stores data and programs necessary for the processing in the PC 330.

For example, the storage unit 333 stores the common key 134, a PC-specific private key 335 as a second unique private key, and a PC-specific public key 336 as a second unique public key.

The common key 134 stored in the storage unit 333 in the third embodiment is substantially the same as the common key 134 stored in the storage unit 133 in the first embodiment.

The pair of the PC-specific private key 335 and the PC-specific public key 336 is a pair of the private key and the public key generated by the PC 330 according to the public key cryptography. The public key cryptography here can utilize any known technology.

The control unit 340 controls the processing in the PC 330.

The control unit 340 includes the key acquisition unit 241, an FW acquisition unit 342, the encryption unit 243, the FW update management unit 244, a key generation unit 345, and a decryption unit 346.

The key acquisition unit 241, the encryption unit 243, and the FW update management unit 244 of the control unit 340 in the third embodiment are substantially the same as the key acquisition unit 241, the encryption unit 243, and the FW update management unit 244 of the control unit 240 in the second embodiment, respectively.

The key generation unit 345 is a second key generation unit that generates a pair of the PC-specific private key and the PC-specific public key, which is a pair of the private key and the public key of the PC 330.

Specifically, the key generation unit 345 generates the pair of the PC-specific private key 335 and the PC-specific public key 336, which is the pair of the private key and the public key specific to the PC 330 according to the known public key cryptography. For example, the key generation unit 345 only needs to generate the PC-specific private key 335 and the PC-specific public key 336 when it receives an instruction from the user of the PC 330, or when an application for managing the printer 150 is first started up. The generated PC-specific private key 335 and PC-specific public key 336 are then stored in storage unit 333.

The FW acquisition unit 342 sends the PC-specific public key 336 to the server 310 via the communication unit 131 and then acquires the re-encrypted FW as the third encrypted FW, which is the common key encrypted FW 113 encrypted with the PC-specific public key 336.

Specifically, the FW acquisition unit 342 sends to the server 310, an acquisition request for the FW including the PC-specific public key 336 read from the storage unit 333, via the communication unit 131. The FW acquisition unit 342 subsequently receives the re-encrypted FW as its response.

The FW acquisition unit 342 then provides the re-encrypted FW received from the server 310 to the decryption unit 346.

The decryption unit 346 decrypts the re-encrypted FW by using the PC-specific private key 335 to acquire the common key encrypted FW 113.

For example, when the decryption unit 346 receives the re-encrypted FW from the FW acquisition unit 342, it decrypts the re-encrypted FW by using the PC-specific private key 335 read from the storage unit 333 to acquire the common key encrypted FW 113.

The decryption unit 346 then provides the acquired common key encrypted FW 113 to the FW update management unit 244, and the FW update management unit 244 temporarily stores the common key encrypted FW 113 in the temporary storage unit 332.

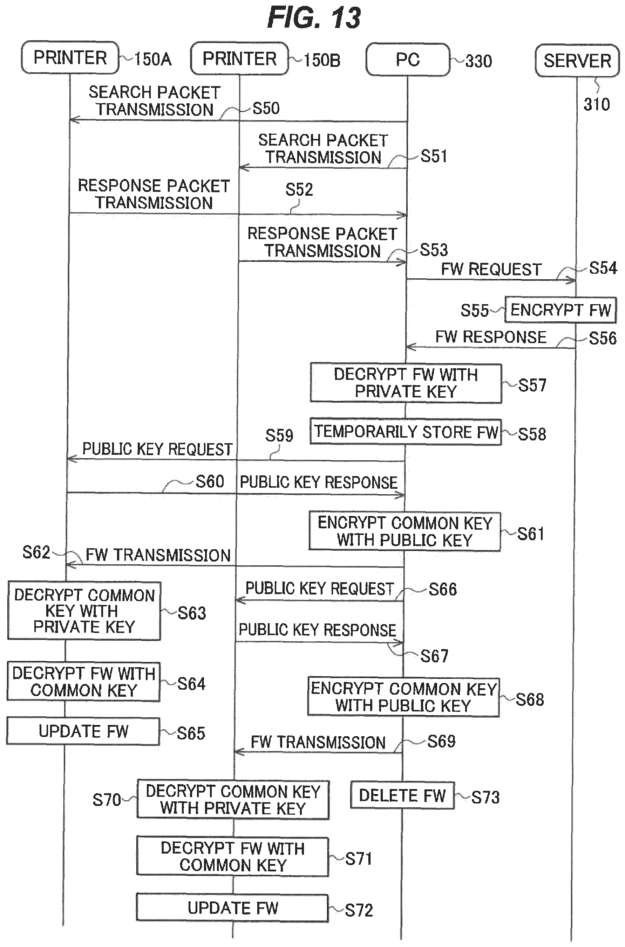

FIG. 13 is a sequence diagram illustrating an operation of the FW update system 300 in the third embodiment.

Here, the device search processing performed in steps S50 to S53 of FIG. 13 is substantially the same as the device search processing performed in steps S20 to S23 of FIG. 10.

After the processing in step S53, the FW acquisition unit 342 of the PC 330 reads the PC-specific public key 336 stored in the storage unit 333 and sends an acquisition request for the FW, including the PC-specific public key 336, to the server 310 via the communication unit 131 (S54).

In the server 310 that has received such an acquisition request, the encryption unit 322 encrypts the common key encrypted FW 113 stored in the storage unit 112 by using the PC-specific public key 336 included in the acquisition request for the FW, thereby generating the re-encrypted FW (S55).

The FW management unit 321 then makes a response by sending the re-encrypted FW to the PC 330 via the communication unit 111 (S56).

In the PC 330 that has received such a re-encrypted FW, the decryption unit 346 reads the PC-specific private key 335 stored in the storage unit 333 and decrypts the re-encrypted FW by using the PC-specific private key 335, thereby acquiring the common key encrypted FW 113. The acquired common key encrypted FW 113 is provided to the FW update management unit 244.

The FW update management unit 244 of the PC 330 temporarily stores the common key encrypted FW 113 provided from the decryption unit 346, to the temporary storage unit 332 (S58). The processing then proceeds to step S59.

The processes in steps S59 to S73 of FIG. 13 are substantially the same as those in steps S27 to S41 of FIG. 10, respectively.

As described above, according to the third embodiment, since the public key cryptography specific to the PC 330 is also used when the PC 330 downloads the FW from the server 310, the security performance can be improved.

### Fourth Embodiment

As illustrated in FIG. 1, an FW update system 400 according to a fourth embodiment includes the server 110, the PC 130, and a printer 450.

The server 110 and the PC 130 of the FW update system 400 according to the fourth embodiment are substantially the same as the server 110 and the PC 130 of the FW update system 100 according to the first embodiment, respectively.

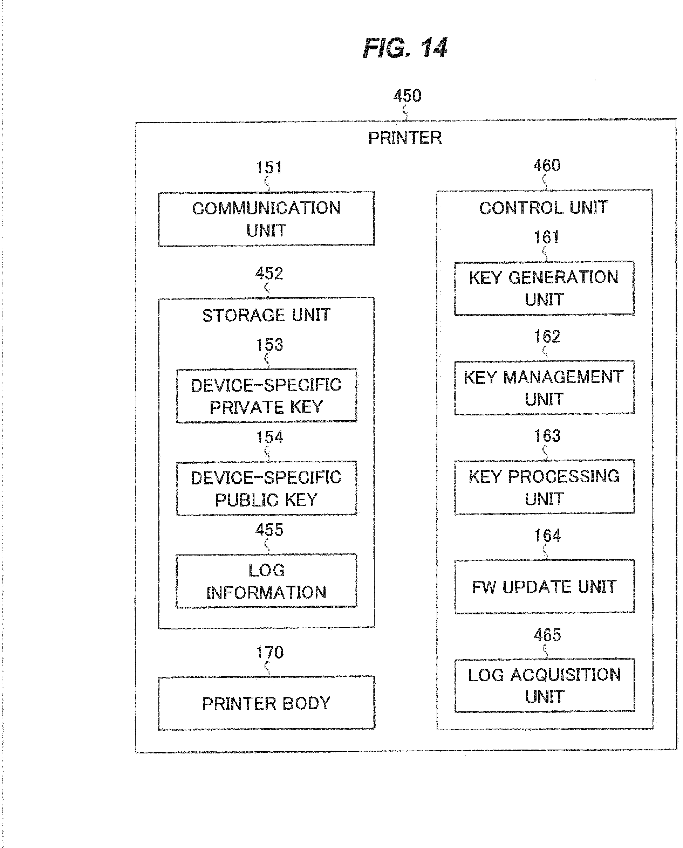

FIG. 14 is a block diagram schematically illustrating a configuration of the printer 450 in the fourth embodiment.

The printer 450 includes the communication unit 151, a storage unit 452, a control unit 460, and the printer body 170.

The communication unit 151 and the printer body 170 of the printer 450 in the fourth embodiment are substantially the same as the communication unit 151 and the printer body 170 of the printer 150 in the first embodiment, respectively.

The storage unit 452 stores data and programs necessary for processing in the printer 450.

For example, the storage unit 452 stores the device-specific private key 153, the device-specific public key 154, and log information 455.

The device-specific private key 153 and the device-specific public key 154 of the storage unit 452 in the fourth embodiment are substantially the same as the device-specific private key 153 and the device-specific public key 154 of the storage unit 152 in the first embodiment, respectively.

The log information 455 is information indicative of a log regarding an FW update.

In the fourth embodiment, the log information 455 is information indicative of the result of the FW update.

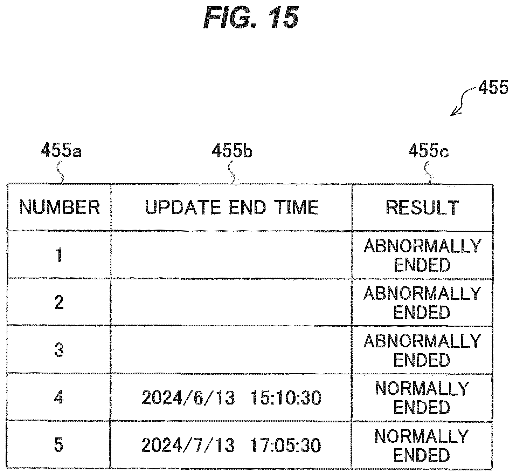

FIG. 15 is a schematic diagram illustrating a first example of the log information 455.

As illustrated in FIG. 15, the log information 455 is information in a table format that has a number column 455a, an update end time column 455b, and a result column 455c.

The number column 455a stores the number as log identification information to identify the log.

The update end time column 455b stores the time when the FW update is normally ended. Here, the year, month, day and time when the FW update is ended are stored.

The result column 455c stores information indicative of the result of the FW update. Here, whether the update is ended normally or abnormally is stored. When the update is ended abnormally, it means that the FW update has failed.

Returning to FIG. 14, the control unit 460 controls the processing in the printer 450.

The control unit 460 includes the key generation unit 161, the key management unit 162, the key processing unit 163, the FW update unit 164, and a log acquisition unit 465.

The key generation unit 161, the key management unit 162, the key processing unit 163, and the FW update unit 164 of the control unit 460 in the fourth embodiment are substantially the same as the key generation unit 161, the key management unit 162, the key processing unit 163, and the FW update unit 164 of the control unit 160 in the first embodiment, respectively.

The log acquisition unit 465 acquires log information indicative of a log regarding an FW update and stores the log information in the storage unit 452.

Here, the log acquisition unit 465 monitors the processing in the FW update unit 164 and stores the result of the FW update performed in the FW update unit 164, in the storage unit 452 as the log information 455. The result of the FW update indicates whether the FW update has succeeded or failed.

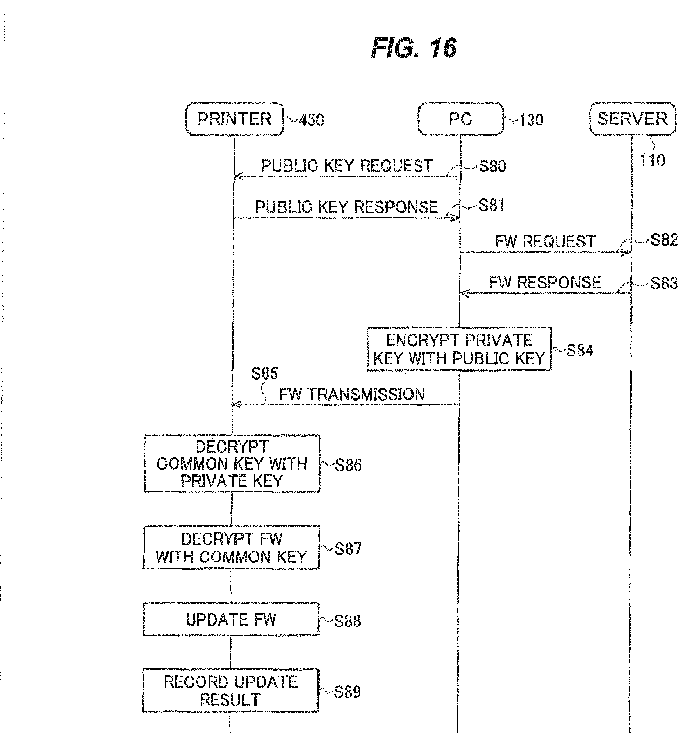

FIG. 16 is a sequence diagram illustrating an operation of the FW update system 400 in the fourth embodiment.

Here, the processes in steps S80 to S88 in FIG. 16 are substantially the same as those in steps S10 to S18 in FIG. 7.

After the process in step S88, the log acquisition unit 465 stores the result of the FW update performed in the FW update unit 164, in the storage unit 452 as the log information 455 (S89).

As described above, according to the fourth embodiment, since the printer 450 stores the log regarding the FW update, the user of the printer 450 can recognize the updated state of the FW by referring to the log.

### Fifth Embodiment

As illustrated in FIG. 1, an FW update system 500 according to a fifth embodiment includes the server 110, the PC 130, and a printer 550.

The server 110 and the PC 130 of the FW update system 500 according to the fifth embodiment are substantially the same as the server 110 and the PC 130 of the FW update system 100 according to the first embodiment, respectively.

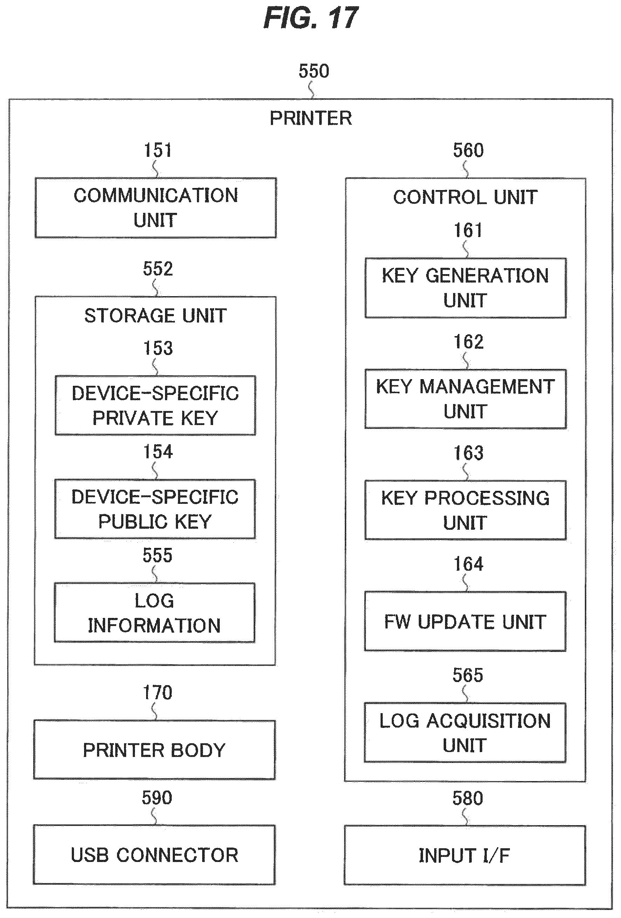

FIG. 17 is a block diagram schematically illustrating a configuration of the printer 550 in the fifth embodiment.

The printer 550 in the fifth embodiment includes the communication unit 151, a storage unit 552, a control unit 560, the printer body 170, an input InterFace (I/F) 580, and a USB connector 590.

The communication unit 151 and the printer body 170 of the printer 550 in the fifth embodiment are substantially the same as the communication unit 151 and the printer body 170 of the printer 150 in the first embodiment, respectively.

The input I/F 580 receives various inputs from the user of the printer 550.

In the fifth embodiment, it is assumed that the user who is going to update the FW enters a user name into the input I/F 580 before performing the FW update.

The USB connector 590 is a connection I/F that conforms to the USB.

In the fifth embodiment, the printer 550 is capable of acquiring the FW, via the USB connector 590, from a USB memory or even through USB cable. The acquisition of the FW via the USB connector 590 can be performed using any known method and is not limited to a specific method.

The storage unit 552 stores data and programs necessary for processing in the printer 550.

For example, the storage unit 552 stores the device-specific private key 153, the device-specific public key 154, and log information 555.

The device-specific private key 153 and the device-specific public key 154 of the storage unit 552 in the fifth embodiment are substantially the same as the device-specific private key 153 and the device-specific public key 154 of the storage unit 152 in the first embodiment, respectively.

The log information 555 is information indicative of the log regarding the FW update processing in the printer 550.

In the fifth embodiment, the log information 555 is information indicative of the contents and update results of the FW update processing. Here, in addition to the update result indicative of whether the FW update has succeeded or failed, the log information 555 indicates at least one of the following: user identification information to identify the user who provides an instruction to update the FW; and the cause of the failure if the FW update fails.

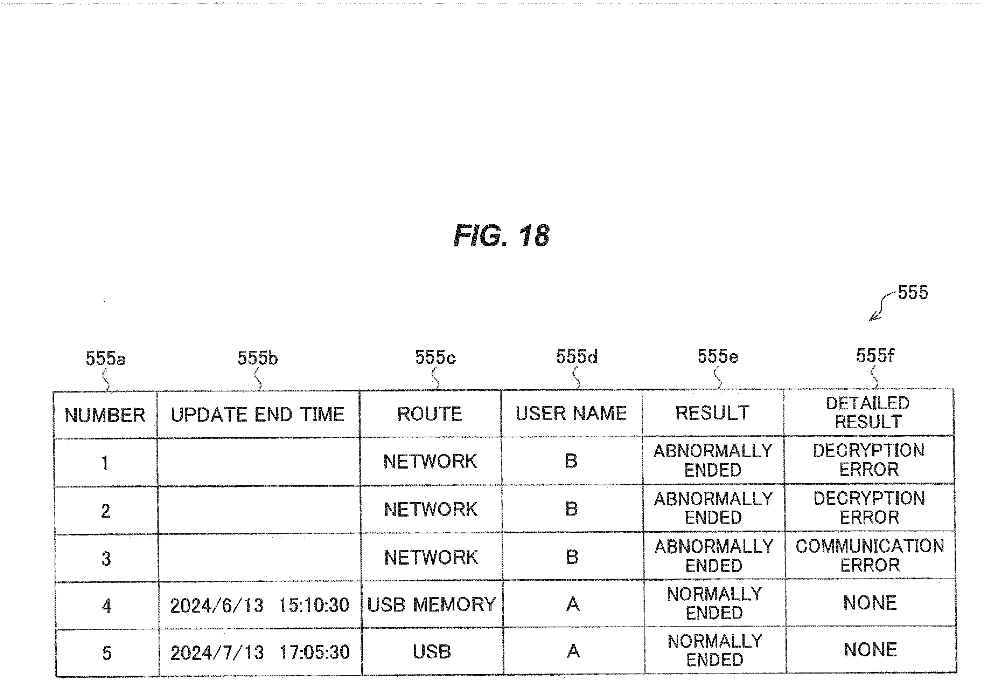

FIG. 18 is a schematic diagram illustrating a second example of the log information 555.

As illustrated in FIG. 18, the log information 555 is information in a table format that has a number column 555a, an update end time column 555b, a route column 555c, a user name column 555d, a result column 555e, and a detailed result column 555f.

The number column 555a stores the number as log identification information to identify the log.

The update end time column 555b stores the time when the FW update is normally ended. Here, the year, month, day and time when the FW update is ended are stored.

The route column 555c stores information indicative of a source from which the FW is acquired.

Specifically, when the "network" is described in the route column 555c, it indicates that the FW is acquired from the PC 130 by the communication unit 151 via the first network 101, as described above.

When the "USB memory" is described in the route column 555c, it indicates that the FW is acquired from the USB memory via the USB connector 590.

When the "USB" is described in the route column 555c, it indicates that the FW is acquired from another device (not illustrated) via the USB connector 590 and via the USB cable.

The user name column 555d stores the user name, which is user identification information to identify the user who performs the FW update.

As described above, it is assumed that the user who is going to perform the FW update enters the user name into the input I/F 580 before performing the FW update, and the input user name is stored in the user name column 555d.

The result column 555e stores information indicative of the result of the FW update. Here, whether the update is ended normally or abnormally is stored.

The detailed result column 555f stores information indicative of the cause of abnormal end when the result of the FW update is abnormally ended.

For example, when the "decryption error" is stored in the detailed result column 555f, it indicates that the printer 550 has not been able to decrypt the FW. When the "communication error" is stored in the detailed result column 555f, it indicates that the communication unit 151 of the printer 550 has not been able to acquire the FW.

It is noted that when the "none" is stored in the detailed result column 555f, it indicates that the FW update is normally ended.

Returning to FIG. 17, the control unit 560 controls the processing in the printer 550.

The control unit 560 includes the key generation unit 161, the key management unit 162, the key processing unit 163, the FW update unit 164, and a log acquisition unit 565.

The key generation unit 161, the key acquisition unit 162, the key processing unit 163, and the FW update unit 164 of the control unit 560 in the fifth embodiment are substantially the same as the key generation unit 161, the key acquisition unit 162, the key processing unit 163, and the FW update unit 164 of the control unit 160 in the first embodiment, respectively.

The log acquisition unit 565 acquires the log regarding the FW update and stores the log in the storage unit 552 as the log information 555.

Here, the log acquisition unit 565 monitors the processing in the communication unit 151, the processing in the key processing unit 163, the processing in the FW update unit 164, the contents input to the input I/F 580, and the processing in the USB connector 590, and stores the contents and update results of the FW update processing in the storage unit 552 as the log information 555.

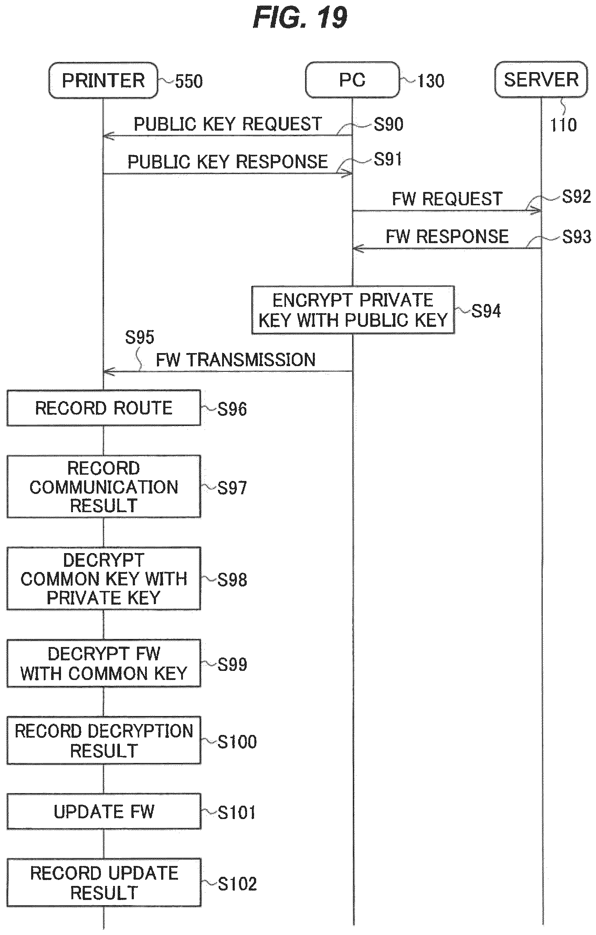

FIG. 19 is a sequence diagram illustrating an operation of the FW update system 500 in the fifth embodiment.

Here, the processes in steps S90 to S95 in FIG. 19 are substantially the same as those in steps S10 to S15 in FIG. 7, respectively.

It is assumed that the log acquisition unit 565 stores the user name entered into the input I/F 580, in the log information 555 before the FW is updated.

In the printer 550 that has received the encrypted common key-attached FW, the log acquisition unit 565 stores an acquisition route of the encrypted common key-attached FW in the log information 555 (S96). Here, the "network" is stored as the acquisition route.

In a case where the communication unit 151 does not receive the encrypted common key-attached FW even after a predetermined period of time has elapsed after receiving the acquisition request for the device-specific public key of the printer 550 in step S90, the FW update is abnormally ended due to a communication error. When the FW update is abnormally ended due to the communication error, the log acquisition unit 565 then stores an abnormal ending of the FW update caused by the communication error, in the log information 555 (S97). Here, the explanation will be continued, assuming that the FW update is not ended abnormally due to the communication error.

Next, the key processing unit 163 decrypts the encrypted common key included in the acquired encrypted common key-attached FW by using the device-specific private key 153 read from the storage unit 152, thereby acquiring the common key (S98).

By using the common key acquired in this way, the key processing unit 163 decrypts the common key encrypted FW 113 included in the encrypted common key-attached FW, thereby acquiring the FW (S99).

When the encrypted common key cannot be decrypted in step S98, or when the common key encrypted FW 113 cannot be decrypted in step S99, it means that the FW update is abnormally ended due to a decryption error. When the FW update is abnormally ended due to the decryption error, the log acquisition unit 565 stores the abnormal ending of the FW update caused by the decryption error, in the log information 555 (S100). Here, the explanation will be continued, assuming that the FW update is not ended abnormally due to the decryption error.

Next, the FW update unit 164 updates the FW of the printer 550 by using the FW acquired (S101).

The log acquisition unit 565 then stores the result of the FW update performed in the FW update unit 164, in the log information 555 (S102).

As described above, according to the fifth embodiment, since the printer 550 stores the log regarding the FW update, the user of the printer 550 can recognize the updated state of the FW by referring to the log.

### DESCRIPTION OF REFERENCE CHARACTERS

100, 200, 300, 400, 500 FW update system
110, 310 Server
111 Communication unit
112 Storage unit
120, 320 Control unit
121, 321 FW management unit
322 Encryption unit
130, 230, 330 PC
131 Communication unit
332 Temporary storage unit
133, 333 Storage unit
140, 240, 340 Control unit
141, 241 Key acquisition unit
142, 242, 342 FW acquisition unit
345 Key generation unit
346 Decryption unit
143, 243 Encryption unit
244 FW update management unit
150, 450, 550 Printer
151 Communication unit
152, 452 Storage unit
160, 460, 560 Control unit
161 Key generation unit
162 Key management unit
163 Key processing unit
164 FW update unit
465, 565 Log acquisition unit
170 Printer body
580 Input I/F
590 USB connector

## Claims

1. An information processing device (150, 450, 550) that acquires first encrypted firmware via an information communication device (130, 230, 330) from a storage device (110, 310) that stores the first encrypted firmware, the first encrypted firmware being firmware encrypted with a common key, the information processing device (150, 450, 550) comprising:
a first communication unit (151) configured to communicate with the information communication device;
a first key generation unit (161) configured to generate a pair of a first unique private key and a first unique public key that is a pair of a private key and a public key;
a key processing unit (163) configured to receive, via the first communication unit (151), second encrypted firmware including the first encrypted firmware and an encrypted common key that is the common key encrypted using the first unique public key, decrypt the encrypted common key by using the first unique private key to acquire the common key, and decrypt the first encrypted firmware by using the common key to acquire the firmware; and
a firmware update unit (164) configured to update firmware of the information processing device by using the acquired firmware.

2. The information processing device (450, 550) according to claim 1, wherein the information processing device (450, 550) further comprises a log acquisition unit (465, 565) that acquires log information indicative of a log regarding an update of the firmware.

3. The information processing device (450, 550) according to claim 2, wherein the log information indicates at least an update result indicative of whether the update of the firmware has succeeded or failed.

4. The information processing device (550) according to claim 2 or 3, wherein the log information further indicates at least one of user identification information for identifying a user who provides an instruction to update the firmware and a cause of a failure if the update fails.

5. A firmware update system (100, 200, 300, 400, 500) comprising: the information processing device (150, 450, 550) according to any one of claims 1 to 4; the storage device (110, 310); and the information communication device (130, 230, 330),
wherein the information processing device (150, 450, 550) further comprises a key management unit (162) configured to send the first unique public key to the information communication device (130, 230, 330) via the first communication unit (151),
the information communication device (130, 230, 330) comprises:
a second communication unit (131) configured to communicate with the information processing device (150, 450, 550) and the storage device (110, 310);
a key acquisition unit (141, 241) configured to acquire the first unique public key from the information processing device (150, 450, 550) via the second communication unit (131);
a firmware acquisition unit (142, 242, 342) configured to acquire the first encrypted firmware from the storage device (110, 310) via the second communication unit (131); and
a first encryption unit (143, 243) configured to encrypt the common key by using the first unique public key to generate the encrypted common key, and generates the second encryption firmware including the encrypted common key and the first encrypted firmware, and
wherein the storage device (110, 310) comprises:
a third communication unit (111) configured to communicate with the information communication device (130, 230, 330); and
a firmware management unit (121, 321) configured to send the first encrypted firmware to the information communication device (130, 230, 330) via the third communication unit (111).

6. A firmware update system (200) comprising: a plurality of information processing devices (150) including the information processing device (150) according to any one of claims 1 to 4, each of the plurality of information processing devices (150) being configured in a same manner as the information processing device (150); the storage device (110, 310); and the information communication device (130, 230, 330),
wherein the information communication device (230) comprises:
a second communication unit (131) configured to communicate with the plurality of information processing devices (150) and the storage device (110);
a key acquisition unit (241) configured to acquire the first unique public key from each of the plurality of information processing devices (150) via the second communication unit (131);
a firmware acquisition unit (242) configured to acquire the first encrypted firmware from the storage device (110) via the second communication unit (131);
a temporary storage unit (232) configured to temporarily store the first encrypted firmware;
a first encryption unit (243) configured to encrypt the common key by using the first unique public key of each of the plurality of information processing devices (150) to generate the encrypted common key for each of the plurality of information processing devices (150), generate the second encryption firmware that includes the encrypted common key and the first encrypted firmware, for each of the plurality of information processing devices (150); and
a firmware update management unit (244) configured to send the second encrypted firmware to each of the plurality of information processing devices (150) and delete the first encrypted firmware from the temporary storage unit (232) after sending the corresponding second encrypted firmware to all the plurality of information processing devices (150), and
wherein the storage device (110) comprises:
a third communication unit (111) configured to communicate with the information communication device (230); and
a firmware management unit (121) configured to send the first encrypted firmware to the information communication device (230) via the third communication unit (111).

7. A firmware update system (300) comprising: a plurality of information processing devices (150) including the information processing device (150) according to any one of claims 1 to 4, each of the plurality of information processing devices (150) being configured in a same manner as the information processing device (150); the storage device (110, 310); and the information communication device (130, 230, 330),
wherein the information communication device (330) comprises:
a second communication unit (131) configured to communicate with the plurality of information processing devices (150) and the storage device (310);
a key acquisition unit (241) configured to acquire the first unique public key from each of the plurality of information processing devices (150) via the second communication unit (131);
a second key generation unit (345) configured to generate a pair of a second unique private key and a second unique public key which is a pair of a private key and a public key;
a firmware acquisition unit (342) configured to send the second unique public key to the storage device (310) via the second communication unit (131) and acquire third encrypted firmware that is the first encrypted firmware encrypted by using the second unique public key;
a decryption unit (346) configured to decrypt the third encrypted firmware by using the second unique private key to acquire the first encrypted firmware;
a temporary storage unit (332) configured to temporarily store the first encrypted firmware;
a first encryption unit (243) configured to encrypt the common key by using the first unique public key of each of the plurality of information processing devices (150) to generate the encrypted common key for each of the plurality of information processing devices (150), and generate the second encryption firmware that includes the encrypted common key and the first encrypted firmware, for each of the plurality of information processing devices (150); and
a firmware update management unit (244) configured to send the second encrypted firmware to each of the plurality of information processing devices (150) and delete the first encrypted firmware from the temporary storage unit (332) after sending the corresponding second encrypted firmware to all the plurality of information processing devices (150), and
wherein the storage device (310) comprises:
a third communication unit (111) configured to communicate with the information communication device;
a second encryption unit (322) configured to encrypt the first encrypted firmware by using the second unique public key acquired via the third communication unit (111) to generate the third encrypted firmware; and
a firmware management unit (321) configured to send the third encrypted firmware to the information communication device (330) via the third communication unit (111).

8. A firmware update method for updating firmware of an information processing device (150) by using first encrypted firmware that is firmware encrypted with a common key, the method comprising:
generating a pair of a first unique private key and a first unique public key that is a pair of a private key and a public key;
receiving second encrypted firmware including the first encrypted firmware and an encrypted common key that is the common key encrypted using the first unique public key;
decrypting the encrypted common key by using the first unique private key to acquire the common key;
decrypting the first encrypted firmware by using the common key to acquire the firmware; and
updating the firmware of the information processing device (150) by using the acquired firmware.
